# EUROPÄISCHE PATENTANMELDUNG

(11) **EP 2 676 928 A1**
(43) Veröffentlichungstag der Anmeldung: **25.12.2013**
(21) Anmeldenummer: 12173253.1
(22) Anmeldetag: 22.06.2012
(51) Int. Cl.: C01B 17/16, B01J 8/06, B01J 10/00, B01J 19/00, B01J 19/24, B01J 4/00

(54) **Reaktor und Verfahren zur Herstellung von Schwefelwasserstoff**

(71) Anmelder: Evonik Industries AG, 45128 Essen (DE)
(72) Erfinder: Finkeldei, Caspar Heinrich, 63755 Alzenau (DE); Cheung, Chiu Kee, 63755 Alzenau (DE); Maassen, Ralf, 50374 Erftstadt (DE); Wenner, Stefan, 278106 Singapore (SG); Körfer, Martin, 63796 Kahl (DE)

(57) **Zusammenfassung**

Die vorliegende Erfindung betrifft einen Reaktor und ein Verfahren zur Synthese von Schwefelwasserstoff aus elementarem Schwefel und Wasserstoff bei erhöhtem Druck und erhöhter Temperatur. Die Erfindung betrifft ferner die Verwendung des Reaktors zur Herstellung von Schwefelwasserstoff in hoher Ausbeute und mit niedrigem H₂Sₓ-Gehalt.

## Beschreibung

Die vorliegende Erfindung betrifft einen Reaktor und ein Verfahren zur Synthese von Schwefelwasserstoff aus elementarem Schwefel und Wasserstoff bei erhöhtem Druck und erhöhter Temperatur. Die Erfindung betrifft ferner die Verwendung des Reaktors zur Herstellung von Schwefelwasserstoff in hoher Ausbeute und mit niedrigem H₂Sₓ-Gehalt.

Schwefelwasserstoff ist ein industriell wichtiges Zwischenprodukt beispielsweise für die Synthese von Methylmercaptan, Dimethylsulfid, Dimethyldisulfid, Sufonsäuren, Dimethylsulfoxid, Dimethylsulfon sowie für zahlreiche Sulfidierungsreaktionen. Es wird heute überwiegend aus der Erdöl- und Erdgasaufbereitung sowie durch Reaktion von Schwefel und Wasserstoff gewonnen.

Die Herstellung von Schwefelwasserstoff aus den Elementen erfolgt üblicherweise durch Einleiten von gasförmigem Wasserstoff in eine Schwefelschmelze, wobei Schwefel in die Gasphase überführt und dort in exothermer Reaktion mit Wasserstoff zu Schwefelwasserstoff umgesetzt wird (Ullmann's Encyclopedia of Industrial Chemistry, Sixth Edition, 1998, Wiley-VCH).

Um eine zufriedenstellende Reaktionsgeschwindigkeit und eine hohe Schwefelwasserstoffausbeute zu erzielen, muss die Umsetzung bei gegenüber Normalbedingungen erhöhter Temperatur stattfinden. Je nach weiterem Verwendungszweck kann es erforderlich sein, den hergestellten Schwefelwasserstoff bei einem Druck von >5 bar zur Verfügung zu stellen. Es wäre in diesem Fall von Vorteil, die Schwefelwasserstoffsynthese direkt bei dem benötigten Druck durchzuführen. Dies erfordert eine weitere Temperaturerhöhung, um sicherzustellen, dass genügend Schwefel in die Gasphase überführt wird. Die Durchführung der Schwefelwasserstoffsynthese bei einer Temperatur von >450°C hat jedoch den Nachteil, dass Schwefelwasserstoff unter diesen Bedingungen Korrosionsschäden am Reaktormaterial hervorruft. Es wird deswegen ein Reaktoraufbau benötigt, der hohe Umsatzraten ermöglicht und gleichzeitig Schäden zumindest an den drucktragenden Elementen des Reaktors vermeidet.

Ein Ansatz zur Steigerung der Schwefelwasserstoffausbeute ist es, die Verweilzeit des Wasserstoffgases in der Schwefelschmelze zu erhöhen. Dies geschieht beispielsweise in US 2 876 070 und DE 10 2008 040 544 A1 durch Verwendung von Reaktoren, die innerhalb der Schwefelschmelze angeordnete Gassammelbereiche in Form von Zwischenböden oder Tassen aufweisen. Allerdings wird durch diese Art des Aufbaus ein Umsatzgrad an Wasserstoff von lediglich >96% erzielt. Durch Erhöhung der Zahl der Gassammelbereiche könnte der Umsatzgrad vielleicht gesteigert werden, dies hätte jedoch den Nachteil, dass ein größeres Reaktorvolumen benötigt würde.

Das Prinzip, die Verweilzeit des Wasserstoffgases in der Schwefelschmelze zu erhöhen, ist in der DE 10 2008 040 544 A1 außerdem durch einen Reaktor verwirklicht, der eine Schüttung aus Keramikfüllkörpern in der Schwefelschmelze aufweist. Mit diesem Reaktor wird ein Umsatzgrad von >99% erreicht. Allerdings erfordert diese Reaktorbauweise eine konstante Wasserstoffzufuhr, da bei einem Nachlassen oder Abschalten der Wasserstoffzufuhr das Reaktionsgas vollständig aus dem Bereich der Füllkörperschüttung entweichen und sich die Füllkörperschüttung mit flüssigem Schwefel füllen kann. Ein solcher Reaktor kann deshalb nur in einem sehr engen Lastbereich betrieben werden.

Eine weitere Möglichkeit zur Steigerung der Reaktionsgeschwindigkeit ist die Verwendung von Katalysatoren, beispielsweise Oxide oder Sulfide von Kobalt, Nickel oder Molybdän. Dieser Ansatz ist beispielsweise in US 2 863 725 und EP 2 125 612 B1 in Form von Reaktoren offenbart, die mit Katalysator gefüllte Rohre aufweisen, welche in die Schwefelschmelze eintauchen und von den gasförmigen Reaktanden durchströmt werden. Als nachteilig erweist sich bei diesen Reaktoren allerdings, dass sie bei einem Druck von <5 bar betrieben werden und dass, bedingt durch die Tatsache, dass die Umsetzung von Schwefel und Wasserstoff vorwiegend katalytisch erfolgt, eine große Menge an Katalysator benötigt wird. Die Aufgabe der vorliegenden Erfindung ist deshalb die Bereitstellung eines Reaktors zur Herstellung von Schwefelwasserstoff aus Schwefel und Wasserstoff, der einen hohen Wasserstoffumsatz sowie eine hohe Reinheit des produzierten Schwefelwasserstoffs gewährleistet. Der Reaktor soll außerdem die Herstellung von Schwefelwasserstoff bei einem Druck von >5 bar ermöglichen, eine möglichst kompakte Bauweise aufweisen und einen möglichst weiten Lastbereich gewährleisten. Insbesondere im Produktionsverbund ist ein möglichst weiter Lastbereich von Vorteil, um flexibel auf Lastschwankungen reagieren zu können, anstatt vom Verbund augenblicklich nicht geforderte, aber durch Unflexibilität bedingte, Überschussmengen entsorgen zu müssen. Schließlich sollte der Reaktor aus Kosten-, Wartungs- und Sicherheitsaspekten bei den angestrebten Betriebsbedingungen wenig anfällig für Korrosionsschäden sein. Mit Hinblick auf die Energie, die zur Bereitstellung der Schwefelschmelze und zur Ableitung der Reaktionswärme benötigt wird, ist weiterhin eine besonders effiziente Reaktorbauweise erwünscht. Außerdem ist eine Minimierung der benötigten Katalysatormenge und eine Maximierung der Katalysatorstandzeit erstrebenswert.

Zur Lösung dieser Aufgabe stellt die vorliegende Erfindung einen Reaktor bereit, der zur kontinuierlichen Herstellung von Schwefelwasserstoff durch exotherme Umsetzung von Schwefel und Wasserstoff unter Bildung eines finalen Produktgasgemisches P_{final} enthaltend Schwefelwasserstoff und Schwefel bei gegenüber Normalbedingungen erhöhter Temperatur und erhöhtem Druck geeignet ist, wobei der Reaktor
- einen unteren Reaktorbereich, geeignet zur Aufnahme einer Schwefelschmelze, und
- eine oder mehrere nicht drucktragende erste Kaverne(n) und je erster Kaverne mindestens eine zum geregelten Zuführen von unter Druck stehendem gasförmigen Wasserstoff geeignete Zuführeinrichtung, wobei die Kavernen geeignet sind zur zumindest zeitweiligen Aufnahme eines sich in exothermer Umsetzung bildenden Produktgasgemisches P₁ enthaltend Schwefelwasserstoff, Schwefel und Wasserstoff,
- eine oder mehrere oberhalb der ersten Kaverne(n) angeordnete nicht drucktragende zweite Kaverne(n), geeignet zur zumindest zeitweiligen Aufnahme des in der/den ersten Kaverne(n) gebildeten Produktgasgemisches P₁ und zur Bildung von weiterem Schwefelwasserstoff durch exotherme Umsetzung von Schwefel und Wasserstoff unter Bildung eines Produktgasgemisches P₂, und
- einen Gassammelbereich, geeignet zur Aufnahme des Produktgasgemisches P_{final} bei gegenüber Normalbedingungen erhöhter Temperatur und erhöhtem Druck,
umfasst. Der Reaktor ist dadurch dadurch gekennzeichnet, dass mindestens eine der zweiten Kavernen mindestens eine zum geregelten Zuführen von unter Druck stehendem gasförmigen Wasserstoff geeignete Zuführeinrichtung umfasst.

Durch die erfindungsgemäße Gestaltung des Reaktors kann gasförmiger Wasserstoff nicht nur in die Schwefelschmelze unterhalb der ersten Kavernen sondern auch in die Schwefelschmelze unmittelbar unterhalb der zweiten Kavernen eingeleitet werden, um beispielsweise die Wasserstoff- und Schwefelkonzentration in P₂ und somit die Reaktionsgeschwindigkeit in den zweiten Kavernen zu steigern. Es hat sich nämlich gezeigt, dass bei ausschließlicher Einspeisung von Wasserstoff in die Schwefelschmelze unterhalb der ersten Kavernen, ein Großteil der Edukte bereits in den ersten Kavernen reagiert und somit die Eduktkonzentration in den zweiten Kavernen gering ist. Dies hat eine Abnahme der Reaktionsgeschwindigkeit in den zweiten Kavernen und eine Verringerung der Ausbeute an Schwefelwasserstoff zur Folge. Mit Hilfe dieser Maßnahme ist es möglich, den Wasserstoffumsatz im Bereich der Schwefelschmelze zu maximieren.

Der Reaktor umfasst einen äußeren, drucktragenden Behälter. Dieser hat bevorzugt die Form eines aufrecht stehenden Zylinders, der an beiden Enden durch je eine Haube geschlossen ist. Ein erfindungsgemäßer Reaktor weist ein Volumen von vorzugsweise 0,5 bis 200 m³ auf. Der erfindungsgemäße Reaktor verfügt außerdem über eine oder mehrere zum Zuführen flüssigen Schwefels geeignete Zuführeinrichtungen.

Die Zuführeinrichtungen zur Einleitung von Wasserstoff befinden sich bevorzugt am unteren Ende des Reaktors, so dass der Reaktor entlang seiner Längsachse von den gasförmigen Reaktanden durchströmt wird.

Der in die Schwefelschmelze eingeleitete Wasserstoff wird mit gasförmigem Schwefel gesättigt und von der oder den ersten Kaverne(n) aufgenommen. Im Gasraum der ersten Kaverne(n) werden Wasserstoff und Schwefel in exothermer Reaktion zu Schwefelwasserstoff umgesetzt, wobei sich das Produktgasgemisch P₁ enthaltend Wasserstoff, Schwefel und Schwefelwasserstoff bildet. Das die erste(n) Kaverne(n) verlassende Produktgasgemisch P₁ wird zumindest teilweise von der oder den zweiten Kavernen aufgenommen und dort unter Bildung von weiterem Schwefelwasserstoff zum Produktgasgemisch P₂ umgesetzt.

Die Kavernen sind vorzugsweise von der Schwefelschmelze umschlossen, so dass die den Kavernen freigesetzte Reaktionswärme in die Schwefelschmelze abgeführt wird.

Als "erste Kaverne" im Sinne dieser Erfindung wird eine Kaverne bezeichnet, falls das Gasgemisch, das in der betroffenen Kaverne gesammelt wird, nicht zuvor bereits andere Kavernen durchströmt hat.

Als "zweite Kaverne" im Sinne dieser Erfindung wird eine Kaverne bezeichnet, wenn zumindest ein Teil des Gasgemisches, das in der betreffenden Kaverne gesammelt wird, unmittelbar zuvor mindestens eine erste Kaverne durchströmt hat.

Unter einer "Kaverne" im Sinne dieser Erfindung wird jegliche bauliche Einrichtung verstanden, die ein Gasvolumen aufnehmen und halten kann. Eine Kaverne kann beispielsweise in Form einer haubenförmigen Einbauvorrichtung ausgeführt sein, unter der sich eine bestimmte Gasmenge sammeln und über die unteren Ränder der nach unten offenen Haubenform in höher gelegene Reaktorbereiche strömen kann. Eine Kaverne kann in einer weiteren beispielhaften Ausführungsform durch Schüttungen von Hohl- oder Füllkörpern gebildet werden, die auf verschiedenen Ebenen angebracht sind. Beispielsweise können diese Hohl- oder Füllkörper auf Sieben oder Siebkästen aufgeschüttet sein. Geeignete Hohl- oder Füllkörper sind beispielsweise gerade oder gebogene Hohlzylinder, Hohlkugeln, verformte Hohlkugeln, glockenförmige Körper, sattelförmige Körper, schraubenförmige Körper oder andere dreidimensionale Körper mit Einbuchtungen und/oder Öffnungen. Um das Eindringen des Gases in die Hohlräume der Hohl- oder Füllkörper zu ermöglichen, verfügen die Hohl- und Füllkörper bevorzugt über Öffnungen in ihrer Außenwand und/oder sind aus porösem Material gefertigt. Eine Schüttung der erfindungsgemäßen Hohl- und Füllkörper weist bevorzugt eine Nutzporosität (offene Porosität) φ_{offen} von über 0,32, besonders bevorzugt über 0,40, am meisten bevorzugt über 0,6 auf.

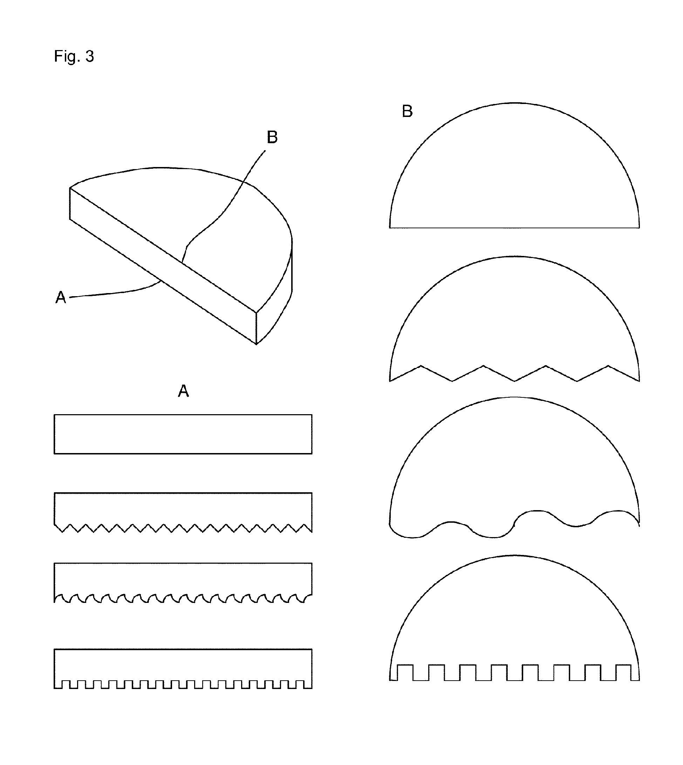

In einer bevorzugten Ausführungsform besteht eine Kaverne aus einem horizontal angebrachten Zwischenboden, der eine oder mehrere Öffnungen aufweist, durch die Gas in höher gelegene Reaktorbereiche strömen kann. Entlang den Rändern der Öffnungen besitzt der Zwischenboden senkrecht nach unten verlaufende Wehre, durch die ein bestimmtes Gasvolumen in der Kaverne zurückgehalten wird. Figur 3 zeigt einige beispielhafte Ausführungsformen erfindungsgemäß verwendbarer Kavernen.

Die Verwendung von Kavernen in Form haubenförmiger Einbauvorrichtungen oder in Form der oben beschriebenen horizontal angebrachten Zwischenböden ist der Verwendung von Kavernen in Form von Schüttungen von Hohl- oder Füllkörpern in der Regel vorzuziehen. Ein Nachteil von Hohl- oder Füllkörpern kann darin bestehen, dass es unter bestimmten Bedingungen bei längerer Reaktorlaufzeit zu Ablagerungen von Reaktionsnebenprodukten kommen könnte, wodurch die Hohl- oder Füllkörper verstopfen könnten. Die Verwendung von Kavernen in Form von haubenförmigen Einbauvorrichtungen oder in Form von horizontal angebrachten Zwischenböden ist geeignet, diesen potentiellen Nachteil zu vermeiden und kann deshalb ggf. zu einer Verlängerung der Reaktorstandzeit beitragen. Außerdem erleichtert diese Kavernenbauweise die Anpassung der Verweilzeit der gasförmigen Reaktanden in den Kavernen, da Parameter wie beispielsweise das Verhältnis von Höhe zu Breite des Kavernenvolumens leichter zu berechnen und zu verändern sind.

Ein weiterer Vorteil dieser Kavernenbauweise ist, dass das Reaktionsgas selbst bei verringerter Wasserstoffzufuhr nicht vollständig aus den Kavernen entweicht und dass eine Verringerung der Wasserstoffzufuhr zu einer Verlängerung der Verweilzeit führt. Diese Verweilzeitverlängerung ist geeignet eine Verringerung der Reaktionstemperatur infolge niedrigerer Wasserstoffzufuhr auszugleichen und somit einen gleichbleibend hohen Umsatz zu ermöglichen. Durch Kavernen in Form von haubenförmigen Einbauvorrichtungen oder in Form von Zwischenböden wird deswegen der fahrbare Lastbereich des Reaktors erheblich erweitert.

Der Lastbereich des Reaktors kann somit in einem Bereich von 0 bis 4000 Nm³ (H₂)/(m³ (Kavernenvolumen)·h) liegen. Das Kavernenvolumen bezieht sich jeweils auf eine Kaverne, die mit Gas durchströmt wird.

In einer alternativen Ausführungsform sind die Zuführeinrichtungen zur Einleitung von Wasserstoff so ausgelegt, dass der Wasserstoff direkt in den Gasraum der ersten oder zweiten Kavernen eingeleitet werden kann, ohne vorher mit Schwefel gesättigt zu werden. Der Reaktor kann so aufgebaut sein, dass er je erster oder zweiter Kaverne über mehrere Zuführeinrichtungen verfügt, von denen einige Wasserstoff in die Schwefelschmelze einleiten und andere Wasserstoff direkt in den Gasraum der betreffenden Kaverne einleiten. Durch diese Konstruktionsweise kann die relative Wasserstoffkonzentration, also das Verhältnis der Edukte Wasserstoff und Schwefel, in den ersten oder zweiten Kavernen gesteuert werden.

In einer bevorzugten Ausführungsform umfasst der Reaktor zwei oder mehr erste Kavernen. Dabei können die Wasserstoffzuführeinrichtungen so ausgelegt sein, dass die ersten Kavernen unabhängig voneinander mit Wasserstoff versorgt werden können. Die Menge an Schwefel und Wasserstoff, die in eine einzelne Kaverne eingespeist wird, kann somit für jede erste Kaverne separat eingestellt werden. Dies ermöglicht beispielsweise eine Verringerung der Schwefelwasserstoffproduktion durch Abschalten der Wasserstoffzufuhr zu einer oder mehreren ersten Kavernen. Dabei kann die Reaktion in der oder den verbleibenden ersten Kavernen bei gleichbleibender Wasserstoffkonzentration und damit gleichbleibenden Reaktionsbedingungen weiterlaufen. Alternativ kann, bei gleichbleibender Gesamtmenge an eingeleitetem Wasserstoff, die Wasserstofflast auf mehrere Kavernen verteilt oder in einzelnen Kavernen konzentriert werden, um die Reaktionsbedingungen in den ersten Kavernen gezielt zu beeinflussen.

In bestimmten Ausführungsformen kann der Reaktor zusätzlich eine oder mehrere oberhalb der zweiten Kaverne(n) angeordnete nicht drucktragende dritte, und optional weitere, entsprechend geeignete Kavernen umfassen.

Als "dritte (vierte, fünfte, usw.) Kaverne" im Sinne dieser Erfindung, wird eine Kaverne bezeichnet, wenn zumindest ein Teil des Gasgemisches, das in der betreffenden Kaverne gesammelt wird, unmittelbar zuvor mindestens eine zweite (dritte, vierte, usw.) Kaverne durchströmt hat.

Um den Wasserstoffumsatz in den zweiten und höheren Kavernen zu steigern, kann es vorteilhaft sein, die Verweildauer des wasserstoffhaltigen Gasgemisches zu verlängern oder den Wärmeverlust der betroffenen Kavernen zu minimieren. Hierzu kann der Reaktor so ausgeführt sein, dass mindestens eine der zweiten oder höheren Kavernen ein größeres Volumen als jede der ersten Kavernen aufweist und/oder dass mindestens eine der zweiten oder höheren Kavernen eine baulich bedingte geringere Wärmeabfuhr als jede der ersten Kavernen aufweist. Es hat sich nämlich gezeigt, dass beim Betrieb des Reaktors über 60% des Wasserstoffs bereits in der oder den ersten Kavernen umgesetzt werden kann. Durch die zuvor genannten Maßnahmen kann dann erreicht werden, dass mit der oder den zweiten Kavernen der Wasserstoffumsatz auf über 80% oder sogar über 90% steigt. Durch den hierdurch erzielten hohen Wasserstoffumsatz im Bereich der ersten und zweiten Kavernen wird insbesondere vermieden, dass die Reaktion im Gasraum oberhalb der Schwefelschmelze abläuft und es zu einer Überhitzung des Gasraums oberhalb der Schwefelschmelze kommt.

Die baulich bedingte geringere Wärmeabfuhr einer Kaverne kann beispielsweise durch Verwendung eines Materials mit geringerer Wärmeleitfähigkeit erzielt werden. Die betroffene Kaverne kann entweder aus diesem Material gefertigt sein, oder zumindest Teile ihrer Oberfläche können mit diesem Material ausgekleidet sein. Die Auskleidung kann einen Gasspalt ausbilden, der den Wärmetransport zusätzlich verringert. Eine geringere Wärmeabfuhr einzelner Kavernen kann alternativ auch durch Verwendung eines Materials mit größerer Materialstärke erzielt werden.

Wird ein Gasspalt als Isolator verwendet, so kann die Kaverne mit Aluminium oder einer Aluminiumlegierung ausgekleidet sein, um die Korrosionsbeständigkeit des Kavernenmaterials zu erhöhen.

In einer weiteren bevorzugten Ausführungsform wird eine geringere Wärmabfuhr einzelner Kavernen durch Verwendung einer der Wärmeabfuhr hinderlichen Kavernengeometrie erzielt. So kann beispielsweise die Wärmeabfuhr durch ein geringeres Verhältnis von Kavernenoberfläche zu Kavernenvolumen verringert werden.

In einer bevorzugten Ausführungsform weisen die ersten Kavernen ein Verhältnis von Oberfläche zu Volumen von 1,5 bis 30 m⁻¹, bevorzugt von 3 bis 9 m⁻¹, besonders bevorzugt von 4 bis 6 m⁻¹ und/oder ein Verhältnis von Höhe zu Breite von 0,02 bis 5, bevorzugt von 0,05 bis 1, besonders bevorzugt von 0,08 bis 0,12 und/oder ein Verhältnis von Wehrlänge zu Durchsatz von 0,1 bis 10 m*h/t_{H2S}, bevorzugt von 0,2 bis 1,8 m*h/t_{H2S}, besonders bevorzugt von 1,0 bis 1,2 m*h/t_{H2S} auf. In einer weiteren bevorzugten Ausführungsform weist mindesten eine der zweiten Kavernen ein Verhältnis von Oberfläche zu Volumen von 1,5 bis 30 m⁻¹, bevorzugt von 2,8 bis 9 m⁻¹, besonders bevorzugt von 3 bis 5 m⁻¹ und/oder ein Verhältnis von Höhe zu Breite von 0,02 bis 5, bevorzugt von 0,05 bis 2, besonders bevorzugt von 0,1 bis 1 und/oder ein Verhältnis von Wehrlänge zu Durchsatz von 0,1 bis 10 m*h/t_{H2S}, bevorzugt von 0,15 bis 1,8 m*h/t_{H2S}, besonders bevorzugt von 0,2 bis 1,1 m*h/t_{H2S} auf.

Während des Reaktorbetriebs sammelt sich oberhalb der Schwefelschmelze das Produktgasgemisch Pᵤ und gelangt von dort in den Gassammelbereich des Reaktors. In einer bevorzugten Ausführungsform des Reaktors ist der Gassammelbereich oberhalb des unteren Reaktorbereichs angeordnet. In alternativen Ausführungsformen kann der Gassammelbereich beispielsweise auch unterhalb des unteren Reaktorbereichs, innerhalb des unteren Reaktorbereichs oder seitlich zum unteren Reaktorbereich angeordnet sein.

In einer bevorzugten Ausführungsform umfasst der Reaktor zusätzlich eine oder mehrere nicht drucktragende Einbauvorrichtung(en), die geeignet sind zum kontinuierlichen Überführen der gesamtem Menge des im unteren Reaktorbereich gebildeten Produktgasgemisches Pᵤ in den Gassammelbereich und bei Anwesenheit eines Katalysators in der/den Einbauvorrichtung(en) geeignet sind zur Umsetzung von noch im Produktgasgemisch Pᵤ enthaltenem Schwefel und Wasserstoff zu Schwefelwasserstoff.

Vorzugsweise sind die eine oder mehrere Einbauvorrichtung(en) in Form U-förmiger Rohre ausgeführt. Der Reaktor kann mehrere gleichartige oder ähnlich aufgebaute Rohre zur Überführung des Produktgasgemisches umfassen. Die U-förmigen Rohre sind typischerweise senkrecht im Reaktor angebracht, wobei jeweils beide Enden nach oben weisen. Für den Fall, dass der Gassammelbereich oberhalb des unteren Reaktorbereichs angeordnet ist, können die Rohre mit einem Zwischenboden verbunden sein, der den unteren Reaktorbereich vom Gassammelbereich abtrennt, so dass die Enden der Rohre jeweils in den Gassammelbereich ragen, während sich die U-förmigen Teile der Rohre im unteren Reaktorbereich befinden. Die Schenkel der einzelnen Rohre können auch unterschiedlich lang ausgeführt sein, so dass sich die Enden der kürzeren Schenkel im unteren Reaktorbereich befinden und die Enden der längeren Schenkel in den Gassammelbereich ragen.

In einer alternativen Ausführungsform des Reaktors sind die eine oder mehrere Einbauvorrichtung(en) in Form gerader, senkrecht verlaufender Rohre ausgeführt. Die gerade Rohre sind vorzugsweise so angeordnet, dass sie, falls der untere Reaktorbereich eine Schwefelschmelze enthält, in die Schwefelschmelze eintauchen und den Gasraum oberhalb der Schwefelschmelze mit dem innerhalb oder unterhalb des unteren Reaktorbereichs angeordneten Gassammelbereich verbinden.

Die Rohre haben vorzugsweise einen Durchmesser von 20 bis 3.000 mm, bevorzugt von 60 bis 150 mm, besonders bevorzugt von 80 bis 120 mm. Durch Öffnungen, die beispielsweise in der Seitenwand eines Rohrs, oder, im Falle von U-förmigen Rohren mit ungleich langen Schenkeln, am Ende des kürzeren Schenkels angebracht sein können, gelangt das Produktgasgemisch Pᵤ vom unteren Reaktorbereich in die Rohre. Die Öffnungen sind vorzugsweise mit einem Abstand von 0,1 bis 3 m, bevorzugt von 0,4 bis 1,4 m oberhalb der Phasengrenze der Schwefelschmelze angeordnet, um einen Eintritt von flüssigem Schwefel in die Rohre zu vermeiden. Das Produktgasgemisch strömt entlang der Rohre und gelangt über Öffnungen, die beispielsweise am Ende der Rohre angebracht sind, in den Gassammelbereich.

Vorzugsweise enthalten die eine oder mehreren Einbauvorrichtung(en) einen heterogenen Katalysator zur weiteren Umsetzung von im Produktgas Pᵤ enthaltenen Wasserstoff und Schwefel zu Schwefelwasserstoff. Typischerweise wird ein Kobalt und Molybdän enthaltender Katalysator eingesetzt. Bevorzugt handelt es sich um einen schwefelbeständigen Hydrierkatalysator, der bevorzugt aus einem Träger wie beispielsweise Siliziumoxid, Aluminiumoxid, Zirkoniumoxid oder Titanoxid besteht sowie eines oder mehrere der aktiven Elemente Molybdän, Nickel, Wolfram, Eisen, Vanadium, Kobalt, Schwefel, Selen, Phosphor, Arsen, Antimon, und Wismut enthält. Besonders bevorzugt handelt es sich um eine Mischverbindung aus CoO, MoO₃, Al₂O₄ und Sulfat in Tablettenform. Bevorzugt wird der Katalysator in Form einer Festbettschüttung platziert. Der heterogene Katalysator hat dann die Form von Pellets, Tabletten oder vergleichbaren Formkörpern. Es sind aber auch andere Bauformen wie z. B. Waben oder eine Wirbelschicht möglich. Der Katalysator kann ebenfalls als Beschichtung an Füllkörpern, Monolithen oder Gestricken in den Einbauvorrichtungen vorliegen.

Die in den Einbauvorrichtungen platzierte Menge an Katalysator richtet sich nach Menge des umzusetzenden Restwasserstoffs, Dimensionierung der Einbauvorrichtungen, Typ des Katalysators und ggf. weiteren Umständen. Die Menge an eingesetztem Katalysator ist im Falle einer Katalysatorschüttung in Abhängigkeit von der zugeführten Wasserstoffmenge so bemessen, dass die Wasserstofflast einen Wert von 4000 Nm³ (H₂)/(m³ (Schüttvolumen Katalysator)·h) nicht überschreitet.

Zusätzlich kann weiterer Katalysator an einem oder an mehreren Orten im Reaktionsbehälter angebracht sein. Dabei ist der Katalysator vorzugsweise so platziert, dass er nicht mit dem flüssigen Schwefel in Kontakt kommt. Dieser Katalysator kann in Form von Pelletschüttungen, als suspendiertes Pulver im flüssigen Schwefel, als Beschichtung an Füllkörpern, Monolithen oder Gestricken vorliegen. Wenn weiterer Katalysator eingesetzt wird, kann dieser Katalysator in den als Kavernen wirkenden Einbauten angebracht sein. In einer weiteren Ausführungsform kann dieser Katalysator oberhalb des flüssigen Schwefels und aller Kavernen angebracht sein.

In einer bevorzugten Ausführung der Erfindung, ist mindestens eine der Einbauvorrichtungen zur Überführung des Produktgasgemisches Pᵤ vom unteren Reaktor- in den Gassammelbereich baulich so angeordnet, dass sie, nach ausreichendem Befüllen des unteren Reaktorbereichs mit einer Schwefelschmelze, so im thermischen Kontakt mit der Schwefelschmelze stehen, dass, falls die Einbauvorrichtung einen Katalysator enthält, der Katalysator durch Wärmeübertrag auf die Schwefelschmelze gekühlt wird. Im Falle der oben beschriebenen U-förmigen oder geraden Rohre, sind diese vorzugsweise so ausgelegt, dass die äußere Mantelfläche in dem Bereich des Rohrs, der mit Katalysator gefüllt ist, zu mehr als 20%, bevorzugt zu mehr als 50%, besonders bevorzugt zu mehr als 75% von der Schwefelschmelze umgeben ist.

Um eine möglichst gleichmäßige Temperaturverteilung innerhalb des Reaktors zu gewährleisten, umfasst der Reaktor vorzugsweise eine innere Wandung, die beim Betrieb des Reaktors unter Beteiligung des Raumes zwischen äußerer Reaktorwand und der inneren Wandung eine kontinuierliche Umwälzung der Schwefelschmelze nach dem Mammutpumpenprinzip erlaubt. Hierbei strömt Schwefel, angetrieben durch die bodenseitige Einleitung des Wasserstoffs, innerhalb des von der inneren Wandung umschlossenen Reaktorbereichs nach oben und strömt innerhalb des Raumes zwischen äußerer Reaktorwand und der inneren Wandung zu Boden. Der herabströmende Schwefel kann durch Wärmeabfuhr über die äußere Reaktorwand gekühlt werden. In einer bevorzugten Ausführungsform wird die Kühlung des herabströmenden Schwefels durch Wärmetauscher unterstützt, die beispielsweise auf der äußeren Reaktorwand oder im Raum zwischen äußerer Reaktorwand und innerer Wandung angebracht sind.

In einer bevorzugten Ausführungsform umfasst der Reaktor einen zur Kondensation des im Produktgasgemisch P_{final} enthaltenen Schwefels geeigneten Rückflusskühler. Der Rückflusskühler ist bevorzugt oberhalb des Gassammelbereichs angeordnet. Der Rückflusskühler ist über eine zum Transport des Produktgasgemisches P_{final} vom Gassammelbereich zum Rückflusskühler geeignete Hinleitung mit dem Gassammelbereich verbunden und verfügt über eine zum Rückführen des kondensierten Schwefels in den Reaktor, bevorzugt in den unteren Reaktorbereich geeignete Rückleitung. Die Rückführung des kondensierten Schwefels dient außerdem zur Kühlung der Schwefelschmelze und trägt somit zur Aufrechterhaltung einer konstanten Temperatur der Schwefelschmelze bei.

Der erfindungsgemäße Reaktor muss auch bei langem Betrieb von mehreren Jahren oder Jahrzehnten nur wenig gewartet oder repariert werden. Durch die erfindungsgemäße Konstruktion wird das Auftreten von Übertemperaturen an drucktragenden Teilen vermieden und dadurch die Anlagensicherheit erhöht, weil durch verringerte Korrosion in diesem Bereich die Gefahr des Materialversagens und die Wahrscheinlichkeit von Unfällen durch den Austritt von Gefahrenstoffen, wie beispielsweise Schwefelwasserstoff, minimiert wird. Der niedrige Inspektions-, Wartungs- und Reparaturaufwand senkt die Kosten und verbessert die Verfügbarkeit.

Gegenstand der vorliegenden Erfindung ist außerdem ein Verfahren zur Herstellung von Schwefelwasserstoff durch exotherme Umsetzung von Schwefel mit Wasserstoff bei gegenüber Normalbedingungen erhöhter Temperatur und erhöhtem Druck unter Bildung eines Produktgasgemisches P_{final} enthaltend Schwefelwasserstoff und Schwefel, wobei das Verfahren folgende Schritte umfasst:
- Bereitstellung einer Schwefelschmelze in einem unteren Reaktorbereich eines unter Druck stehenden Reaktors,
- Zuführen von unter Druck stehendem Wasserstoff in die Schwefelschmelze, wobei der zugeführte Wasserstoff gemeinsam mit aus der Schwefelschmelze in den gasförmigen Zustand überführtem Schwefel zumindest teilweise von mindestens einer nicht drucktragenden ersten Kaverne aufgenommen wird,
- zumindest zeitweiliges Belassen des Wasserstoffs und des Schwefels in der/den ersten Kaverne(n), so dass sich in exothermer Umsetzung ein Produktgasgemisch P₁ enthaltend Schwefelwasserstoff, Schwefel und Wasserstoff bildet,
- Aufnahme des Produktgasgemisches P₁ in einer oder mehreren zweiten Kaverne(n) und zumindest zeitweiliges Belassen des Produktgasgemisches P₁ darin, so dass der im Produktgasgemisch P₁ enthaltene Schwefel und Wasserstoff unter Bildung von weiterem Schwefelwasserstoff zu einem Produktgasgemisch P₂ umgesetzt wird,
- Zuführen von unter Druck stehendem Wasserstoff in die Schwefelschmelze, wobei der zugeführte Wasserstoff gemeinsam mit aus der Schwefelschmelze in den gasförmigen Zustand überführtem Schwefel zumindest teilweise von mindestens einer nicht drucktragenden zweiten Kaverne direkt aufgenommen wird, und
- Sammeln des Produktgasgemisches P_{final} in einem Gassammelbereich.

Das Verfahren wird vorzugsweise in dem bereits beschriebenen erfindungsgemäßen Reaktor durchgeführt.

Unter "direkter" Aufnahme des Wasserstoffs in der einen oder mehreren zweiten Kavernen wird verstanden, dass das der Wasserstoff nicht zuvor von einer ersten Kaverne aufgenommen wurde.

Anstelle von reinem Wasserstoff kann auch verunreinigter Wasserstoff durch die Schwefelschmelze geleitet werden. Die Verunreinigungen können beispielsweise Kohlendioxid, Schwefelwasserstoff, Wasser, Methanol, Methan, Ethan, Propan, oder andere leichtflüchtige Kohlenwasserstoffe sein. Bevorzugt wird Wasserstoff mit einer Reinheit größer als 65% bezogen auf das Gasvolumen eingesetzt. Die Verunreinigungen im Wasserstoff oder deren Reaktionsprodukte werden bevorzugt vor der Synthese von Methylmercaptan nicht abgetrennt, sondern im Eduktgemisch belassen. Auch der eingesetzte Schwefel kann unterschiedliche Verunreinigungen enthalten.

Druck und Menge des zugeführten Wasserstoffs richten sich nach dem Druck, bei dem der Reaktor betrieben wird, und der benötigten Wasserstoffmenge. Die Menge an eingesetztem Schwefel ist praktisch stöchiometrisch zur eingesetzten Wasserstoffmenge. Verbrauchter Schwefel wird während des Verfahrens nachdosiert.

Das Verfahren kann so durchgeführt werden, dass das Produktgasgemisch in mindestens einer dritten oder höheren Kaverne aufgenommen und zumindest zeitweilig dort belassen wird, so dass der im Produktgasgemisch P₂ enthaltene Schwefel und Wasserstoff unter Bildung von weiterem Schwefelwasserstoff umgesetzt wird.

In einer alternativen Ausführungsform des Verfahrens wird zumindest ein Teil des Wasserstoffs mindestens einer der ersten und/oder höheren Kavernen so zugeführt, dass er zuvor nicht mit der Schwefelschmelze in Kontakt kommt. Hierdurch kann die Wasserstoffkonzentration in den betroffenen Kavernen erhöht werden, ohne dass auch gleichzeitig zusätzlicher Schwefel in den Gasraum der Kaverne überführt wird.

In einer Ausführungsform des Verfahrens wird die gesamte Menge des im unteren Reaktorbereich gebildeten Produktgasgemisches Pᵤ kontinuierlich mittels einer oder mehrerer nicht drucktragenden Einbauvorrichtung(en) in den Gassammelbereich überführt, wobei mit Hilfe eines Katalysators in der/den Einbauvorrichtung(en) der im Produktgasgemisch Pᵤ enthaltene Schwefel und Wasserstoff unter Bildung von weiterem Schwefelwasserstoff umgesetzt wird.

Vorzugsweise wird das Verfahren so durchgeführt, dass die durch die Umsetzung von Schwefel und Wasserstoff freigesetzte Reaktionswärme möglichst vollständig in die Schwefelschmelze abgeführt wird. Dies schließt die am Katalysator freigesetzte Reaktionswärme mit ein. Vorzugsweise wird somit durch Wärmeübertrag der durch die Umsetzung von Schwefel und Wasserstoff im Katalysator freigesetzten Reaktionswärme in die Schwefelschmelze der Katalysator gekühlt.

Das Verfahren wird bevorzugt so durchgeführt, dass der Anteil von Schwefelwasserstoff im Produktgasgemisch vor der Einleitung in die den Katalysator enthaltene Einbauvorrichtung wenigstens 60%, vorzugsweise wenigstens 90% des Gasvolumens beträgt. Die hierfür erforderlichen Prozessbedingungen sind unten beschrieben. Dies hat den Vorteil, dass durch den geringen Anteil von Wasserstoff im Bereich des Katalysators, einer Überhitzung des Katalysators vorgebeugt und somit die Standzeit des Katalysators erhöht wird.

Vorzugsweise umfasst das Verfahren einen zusätzlichen Verfahrensschritt, in dem der im Produktgasgemisch enthaltene Schwefel kondensiert und direkt in den Reaktor, bevorzugt in den unteren Reaktorbereich zurückgeführt wird. Hierdurch ergibt sich der vorteilhafte Effekt, dass eine Kühlung der Schwefelschmelze in Abhängigkeit von der Menge an produziertem Schwefelwasserstoff stattfindet. Insbesondere nehmen in dem Moment, in dem die Temperatur der Schwefelschmelze steigt, ebenfalls der Wasserstoffumsatz, die Schwefelverdampfung und der Schwefelrückfluss zu, so dass einer Überhitzung der Schwefelschmelze entgegengewirkt wird. Die Schwefelkondensation erfolgt vorzugsweise bei einer Temperatur von 120 bis 150°C.

Das erfindungsgemäße Verfahren kann typischerweise bei einem Druck von 1 bis 30 bar, bevorzugt bei 5 bis 15 bar, besonders bevorzugt 7 bis 12 bar durchgeführt werden. Die Temperatur der Schwefelschmelze beträgt typischerweise 300 bis 600°C, bevorzugt 380 bis 480°C, besonders bevorzugt 400 bis 450°C. Wasserstoffumsätze von 99,9 % sind damit leicht zu erzielen. Wasserstoffumsätze im Bereich von 99,93 % wurden ebenfalls beobachtet.

Das erfindungsgemäße Verfahren ermöglicht die Produktion von Schwefelwasserstoff mit einer Reinheit von mehr als 99,8 Volumen-%. Eine Reinheit von bis zu 99,85 Volumen-% wurde ebenfalls ermittelt. Dabei kann das Produktgasgemisch nach Kondensation von enthaltenem Schwefel zwischen 0,05 und 0,15 Volumen-% Wasserstoff, 10 bis 30 ppm Schwefel und 400 bis 600 ppm Sulfane enthalten. Als Sulfane im Sinne dieser Erfindung werden Polyschwefelwasserstoffe nach der Summenformel H₂Sₓ bezeichnet, wobei x typischerweise eine ganze Zahl von 2 bis 10 ist. Die o. g. Schwefelkonzentrationen werden durch bereits durch Schwefelkondensation im o. g. Temperaturbereich ermöglicht. Ein Ausfrieren bei Temperaturen unterhalb von 120 °C - wie es von anderen H₂S-Verfahren bekannt ist - ist dafür nicht erforderlich.

Die vorliegende Erfindung betrifft außerdem die Verwendung eines erfindungsgemäßen Reaktors zur Herstellung von Schwefelwasserstoff mit einem Sulfangehalt von höchstens 600 ppm, bevorzugt höchstens 400 ppm, besonders bevorzugt höchstens 200 ppm.

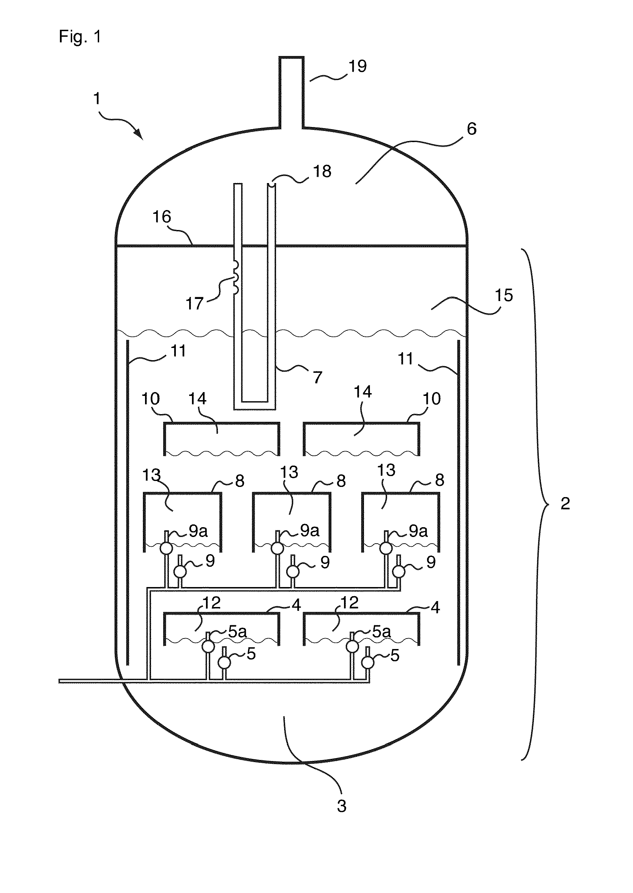

Figur 1 zeigt beispielhaft und schematisch einen Reaktor, der erfindungsgemäß zur Herstellung von Schwefelwasserstoff aus Wasserstoff und Schwefel eingesetzt werden kann.

Der in Figur 1 gezeigte Reaktor 1 umfasst einen äußeren, drucktragenden Behälter, der in seinem unteren Bereich **2** eine Schwefelschmelze **3** enthält. Über Zuführeinrichtungen **5** kann Wasserstoff in die Schwefelschmelze geleitet werden, der direkt von den ersten Kavernen **4** aufgenommen wird. Über Zuführeinrichtungen **5a** kann Wasserstoff auch direkt in den Gasraum **12** der ersten Kavernen **4** eingeleitet werden. In dem Gasraum **12** der ersten Kavernen **4** bildet sich das Produktgasgemisch P₁ enthaltend Wasserstoff, Schwefel und Schwefelwasserstoff. Der gezeigte Reaktor verfügt außerdem über zusätzliche Zuführeinrichtungen **9,** über die Wasserstoff direkt den zweiten Kavernen **8** zugeführt werden kann, in deren Gasraum **13** sich das Produktgasgemisch P₂ bildet. Über Zuführeinrichtungen **9a** kann Wasserstoff auch direkt in den Gasraum **13** der zweiten Kavernen **8** eingeleitet werden. Das nach oben strömende Gasgemisch wird zeitweilig von den dritten Kavernen **10** aufgenommen, in deren Gasraum **14** sich das Produktgasgemisch P₃ bildet. Im Gasraum **15** sammelt sich das gesamte im unteren Reaktorbereich gebildete Produktgasgemisch Pᵤ. Der Gasraum 15 ist durch einen Zwischenboden **16** vom Gassammelbereich **6** getrennt. Zur Überführung des Produktgasgemisches Pᵤ vom Gasraum **15** in den Gassammelbereich **6** dient die Einbauvorrichtung **7.** Die Einbauvorrichtung **7** ist als U-förmiges Rohr ausgeführt, das in die Schwefelschmelze **3** eintaucht. Über die Öffnungen **17** und **18** kann Gas in die Einbauvorrichtung **7** ein- und ausströmen. Die Einbauvorrichtung **7** kann einen Katalysator aufnehmen, der die weitere Umsetzung von Schwefel und Wasserstoff im Produktgasgemisch Pᵤ unter Bildung des Produktgasgemisches P_{final} ermöglicht. Das Produktgasgemisch P_{final}, enthaltend Schwefel und Schwefelwasserstoff, wird im Gassammelbereich **6** aufgenommen und kann über die Öffnung **19** dem Reaktor entnommen bzw. ggf. einem Rückflusskühler zugeführt werden. Im Bereich der Schwefelschmelze enthält der Reaktor außerdem eine innere Wandung **11,** die einer kontinuierlichen Umwälzung der Schwefelschmelze nach dem Mammutpumpenprinzip dient.

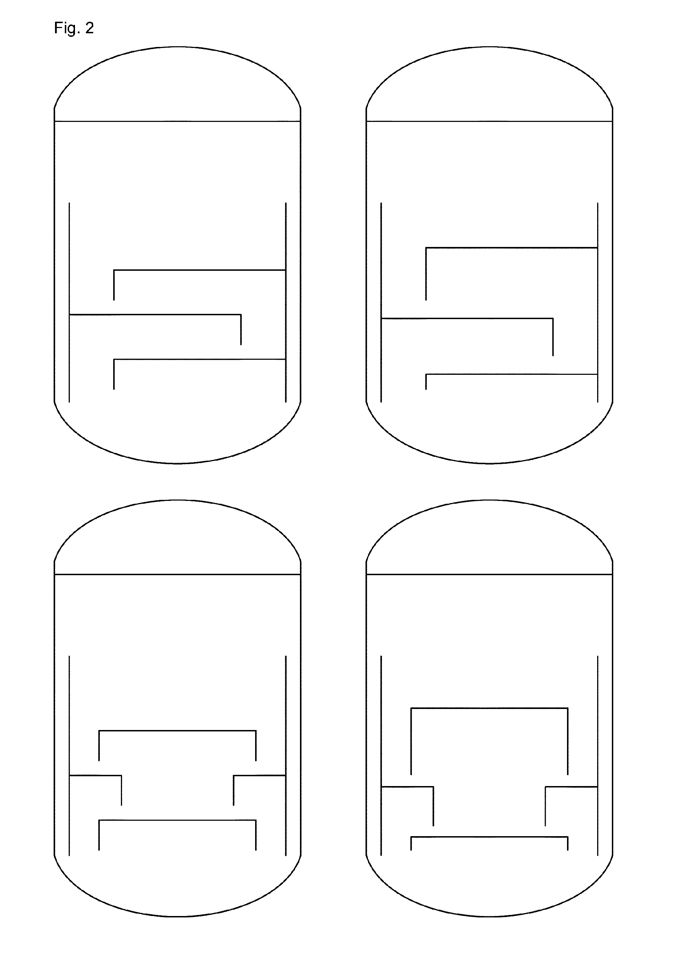

Figur 2 zeigt schematisch vier verschiedene beispielhafte Kavernenanordnungen im Falle eines Reaktors mit ersten, zweiten und dritten Kavernen. Die Kavernen bestehen aus Zwischenböden mit jeweils einer Öffnung. Die Öffnungen sind jeweils so angeordnet, dass das Gasgemisch von der ersten zur zweiten und von der zweiten zur dritten Kaverne strömen muss. Oben links: ein erfindungsgemäßer Reaktor mit jeweils einer ersten, zweiten und dritten Kaverne.

Die drei Kavernen haben jeweils die gleich Geometrie. Oben rechts: ein erfindungsgemäßer Reaktor mit jeweils einer ersten, zweiten und dritten Kaverne, wobei die Wehrhöhe und somit die Verweilzeit des Gasgemisches von der ersten zur dritten Kaverne kontinuierlich zunimmt. Unten links: ein erfindungsgemäßer Reaktor mit jeweils einer ersten, zweiten und dritten Kaverne, wobei alle Kavernen über die gleich Wehrhöhe verfügen. Die zweite Kaverne verfügt über eine kreisrunde Öffnung in der Mitte des Zwischenbodens. Unten rechts: ein erfindungsgemäßer Reaktor mit jeweils einer ersten, zweiten und dritten Kaverne, wobei die Wehrhöhe und somit die Verweilzeit des Gasgemisches von der ersten zur dritten Kaverne kontinuierlich zunimmt.

Figur 3 zeigt schematisch beispielhafte Ausführungsformen von Kavernen. Die gezeigten Kavernen verfügen über einen Zwischenboden, an dessen Rand ein Wehr verläuft. Gezeigt sind verschiedene Ausführungsformen für den unteren Rand des Wehrs **A** und den Verlauf des Wehrs **B.**

### Beispiele

### Beispiel 1 (Vergleichsbeispiel)

In ein Rohr mit einem Innendurchmesser von 5 cm, das bis zu einer Höhe von 1 m mit flüssigem Schwefel gefüllt war, wurden kontinuierlich 1000 Nl/h Wasserstoff über eine Fritte am Boden eingespeist. Der Verbrauch an Schwefel wurde durch Nachdosieren von flüssigem Schwefel ausgeglichen, wobei der Füllstand konstant gehalten wurde. Aus dem Produktgasstrom durch Kondensation abgetrennter Schwefel wurde flüssig in den oberen Bereich des Rohres zurückgeführt. Oberhalb des flüssigen Schwefels waren in Abständen von 10 cm Mantelthermoelemente zur Temperaturmessung angebracht. Während der Reaktor über die Außenwand elektrisch auf 400°C beheizt wurde, lag innerhalb des Schwefels eine gleichmäßige Temperatur von etwa 397°C vor. Die Thermoelemente oberhalb des Schwefels zeigten jedoch eine maximale Temperatur von 520°C. Weiterhin waren oberhalb des flüssigen Schwefels neue Werkstoffproben an der Stelle der maximalen Temperatur aus gebräuchlichen Edelstahl (1.4571) angebracht. Nach einer Betriebszeit von etwa 400 h wurden die Werkstoffproben entnommen und zeigten starke Korrosionserscheinungen in Form von Abplatzungen und Gewichtsverlust an.

### Beispiel 2 (Vergleichsbeispiel)

Beispiel 1 wurde wiederholt, wobei die Höhe des flüssigen Schwefels auf 4 m erhöht wurde. Der Wert der maximalen Temperatur oberhalb des flüssigen Schwefels blieb bestehen. An den Werkstoffproben traten ebenfalls starke Korrosionserscheinungen auf.

### Beispiel 3 (Vergleichsbeispiel)

Beispiel 2 wurde wiederholt, wobei im flüssigen Schwefel 15 Gew.-% eines pulverförmigen Co₃O₄MoO₃/Al₂O₃-Katalysators suspendiert wurden. Der Wert der maximalen Temperatur oberhalb des flüssigen Schwefels blieb bestehen. An den Werkstoffproben traten ebenfalls starke Korrosionserscheinungen auf.

### Beispiel 4

Das erfindungsgemäße Verfahren wurde in einer Pilotanlage untersucht. Der Pilotreaktor verfügte über eine Höhe von ca. 5,5 m, einen Durchmesser von ca. 0,5 m und ein Volumen von ca. 0,8 m³. Die Pilotanlage war mit vier gleich dimensionierten Kavernen in Reihe ausgestattet. Es wurden 70 Nm³/h Wasserstoff über die Wasserstoffzuführungen kontinuierlich dosiert, was einer Wasserstofflast von 3700 Nm³ (H₂)/(m³ (Kavernenvolumen)·h) bezogen auf die einzelnen Kaverne entsprach. Verbrauchter Schwefel wurde füllstandsgeregelt nachdosiert. Aus dem Produktgasstrom durch Kondensation abgetrennter Schwefel wurde flüssig in den Reaktor zurückgeführt. Der Druck im Reaktor betrug 12 bar. Die Temperatur im flüssigen Schwefel betrug 430 °C. Die Verweilzeit in den Kavernen betrug jeweils 5 s. Der H₂-Umsatz durch homogene Reaktion in den Kavernen betrug etwa 90 %. Mittels fest im Reaktor installierter Thermoelemente wurde die Temperatur innerhalb der Kavernen und oberhalb der Schwefelschmelze gemessen. Die höchste dabei in den Kavernen gemessene Temperatur betrug unter diesen Umständen 479 °C. Oberhalb der flüssigen Schwefelphase war kein Anlaufen einer Homogenreaktion erkennbar. Die Gastemperatur oberhalb des flüssigen Schwefels entsprach praktisch der Temperatur des flüssigen Schwefels, so dass keine erhöhten Anforderungen an den Werkstoff des drucktragenden Mantels im Bereich der Gasphase oberhalb des flüssigen Schwefels bestanden.

Die Gasphase strömte dann zum und durch den Katalysator in der Einbauvorrichtung, wie schematisch in Fig. 1 (7) gezeigt. Am Katalysator erfolgte dann der praktisch vollständige Umsatz des verbliebenen Wasserstoffs (Gesamtumsatz an H₂: 99,86 Mol-%). Die Gasbelastung des Katalysators betrug 3.700 Nm³ (H₂)/(m³ (Schüttvolumen Katalysator)·h). Korrosion in Form von Abplatzungen oder Gewichtsverlust trat am eingesetzten Werkstoff praktisch nicht auf. Werkstoffproben aus gebräuchlichem Edelstahl (1.4571), die zu Vergleichszwecken installiert waren, wiesen nur einen moderaten Korrosionsangriff auf.

### Bezugszeichenliste

- (1): Reaktor
- (2): Unterer Reaktorbereich
- (3): Schwefelschmelze
- (4): Erste Kavernen
- (5, 5a): Wasserstoffzuführeinrichtung zu den ersten Kavernen
- (6): Gassammelbereich
- (7): Einbauvorrichtung zur Überführung von Gas vom unteren Reaktorbereich in den Gassammelbereich, ggf. enthaltend einen Katalysator
- (8): Zweite Kavernen
- (9, 9a): Wasserstoffzuführeinrichtung zu den zweiten Kavernen
- (10): Dritte Kavernen
- (11): Innere Wandung
- (12): Gasraum der ersten Kavernen
- (13): Gasraum der zweiten Kavernen
- (14): Gasraum der dritten Kavernen
- (15): Gasraum des unteren Reaktorbereichs
- (16): Zwischenboden
- (17): Öffnung
- (18): Öffnung
- (19): Öffnung

## Patentansprüche

1. Reaktor (1), geeignet zur kontinuierlichen Herstellung von Schwefelwasserstoff durch exotherme Umsetzung von Schwefel und Wasserstoff unter Bildung eines finalen Produktgasgemisches P_{final} enthaltend Schwefelwasserstoff und Schwefel bei gegenüber Normalbedingungen erhöhter Temperatur und erhöhtem Druck, wobei der Reaktor (1)
- einen unteren Reaktorbereich (2), geeignet zur Aufnahme einer Schwefelschmelze (3),
- eine oder mehrere nicht drucktragende erste Kaverne(n) (4) und je erster Kaverne mindestens eine zum geregelten Zuführen von unter Druck stehendem gasförmigen Wasserstoff geeignete Zuführeinrichtung (5, 5a), wobei die Kavernen (4) geeignet sind zur zumindest zeitweiligen Aufnahme eines sich in exothermer Umsetzung bildenden Produktgasgemisches P₁ enthaltend Schwefelwasserstoff, Schwefel und Wasserstoff,
- eine oder mehrere oberhalb der ersten Kaverne(n) (4) angeordnete nicht drucktragende zweite Kaverne(n) (8), die zur zumindest zeitweiligen Aufnahme des in der/den ersten Kaverne(n) (4) gebildeten Produktgasgemisches P₁ und zur Bildung von weiterem Schwefelwasserstoff durch exotherme Umsetzung von Schwefel und Wasserstoff unter Bildung eines Produktgasgemisches P₂ geeignet sind, und
- einen Gassammelbereich (6), geeignet zur Aufnahme des Produktgasgemisches P_{final} bei gegenüber Normalbedingungen erhöhter Temperatur und erhöhtem Druck,
umfasst, **dadurch gekennzeichnet, dass** mindestens eine der zweiten Kavernen (8) mindestens eine zum geregelten Zuführen von unter Druck stehendem gasförmigen Wasserstoff geeignete Zuführeinrichtung (9, 9a) umfasst.

2. Reaktor nach Anspruch 1, **dadurch gekennzeichnet, dass** der Reaktor (1) mindestens zwei nicht drucktragende erste Kavernen (4) und je erster Kaverne (4) mindestens eine zum geregelten Zuführen von unter Druck stehendem gasförmigen Wasserstoff geeignete Zuführeinrichtung (5, 5a) umfasst, wobei die ersten Kavernen (4) geeignet sind zur zumindest zeitweiligen Aufnahme des sich bildenden Produktgasgemisches P₁.

3. Reaktor nach einem der Ansprüche 3 und 4, **dadurch gekennzeichnet, dass** der Reaktor (1) zusätzlich eine oder mehrere oberhalb der zweiten Kaverne(n) (8) angeordnete nicht drucktragende dritte (10), und optional weitere, entsprechend geeignete Kavernen umfasst.

4. Reaktor nach einem der Ansprüche 1 bis 3, **dadurch gekennzeichnet, dass** mindestens eine der zweiten oder höheren Kavernen (8,10) ein größeres Volumen als jede der ersten Kavernen (4) aufweist und/oder dass mindestens eine der zweiten oder höheren Kavernen (8,10) eine baulich bedingte geringere Wärmeabfuhr als jede der ersten Kavernen (4) aufweist.

5. Reaktor nach einem der Ansprüche 1 bis 4, **dadurch gekennzeichnet, dass** der Reaktor (1) zusätzlich eine oder mehrere nicht drucktragende Einbauvorrichtung(en) (7) umfasst, die geeignet sind zum kontinuierlichen Überführen der gesamtem Menge des im unteren Reaktorbereich (2) gebildeten Produktgasgemisches Pᵤ in den Gassammelbereich (6) und bei Anwesenheit eines Katalysators in der/den Einbauvorrichtung(en) (7) geeignet sind zur Umsetzung von noch im Produktgasgemisch Pᵤ enthaltenem Schwefel und Wasserstoff zu Schwefelwasserstoff.

6. Reaktor nach Anspruch 5, **dadurch gekennzeichnet, dass** eine, mehrere oder alle der Einbauvorrichtungen (7) zur Überführung des Produktgasgemisches Pᵤ vom unteren Reaktorbereich (2) in den Gassammelbereich (6) baulich so angeordnet sind, dass sie, nach ausreichendem Befüllen des unteren Reaktorbereichs (2) mit einer Schwefelschmelze (3), so im thermischen Kontakt mit der Schwefelschmelze (3) stehen, dass, falls die Einbauvorrichtung (7) einen Katalysator enthält, der Katalysator durch Wärmeübertrag auf die Schwefelschmelze (3) gekühlt wird.

7. Reaktor nach einem der Ansprüche 1 bis 6, **dadurch gekennzeichnet, dass** der Reaktor eine innere Wandung (11) umfasst, die beim Betrieb des Reaktors unter Beteiligung des Raumes zwischen äußerer Reaktorwand und der inneren Wandung (11) eine kontinuierliche Umwälzung der Schwefelschmelze nach dem Mammutpumpenprinzip erlaubt.

8. Reaktor nach einem der Ansprüche 1 bis 7, **dadurch gekennzeichnet, dass** der Reaktor zusätzlich
- einen zur Kondensation des im Produktgasgemisch P_{final} enthaltenen Schwefels geeigneten Rückflusskühler,
- eine zum Transport des Produktgasgemisches P_{final} vom Gassammelbereich zum Rückflusskühler geeignete Hinleitung und
- eine zum Rückführen des kondensierten Schwefels in den Reaktor
geeignete Rückleitung
umfasst.

9. Verfahren zur Herstellung von Schwefelwasserstoff durch exotherme Umsetzung von Schwefel mit Wasserstoff bei gegenüber Normalbedingungen erhöhter Temperatur und erhöhtem Druck unter Bildung eines Produktgasgemisches P_{final} enthaltend Schwefelwasserstoff und Schwefel, wobei das Verfahren folgende Schritte umfasst:
- Bereitstellung einer Schwefelschmelze in einem unteren Reaktorbereich eines unter Druck stehenden Reaktors,
- Zuführen von unter Druck stehendem Wasserstoff in die Schwefelschmelze, wobei der zugeführte Wasserstoff gemeinsam mit aus der Schwefelschmelze in den gasförmigen Zustand überführtem Schwefel zumindest teilweise von mindestens einer nicht drucktragenden ersten und mindestens einer nicht drucktragenden zweiten Kaverne aufgenommen wird,
- zumindest zeitweiliges Belassen des Wasserstoffs und des Schwefels in der/den ersten Kaverne(n), so dass sich in exothermer Umsetzung ein Produktgasgemisch P₁ enthaltend Schwefelwasserstoff, Schwefel und Wasserstoff bildet,
- Aufnahme des Produktgasgemisches P₁ in einer oder mehreren zweiten Kaverne(n) und zumindest zeitweiliges Belassen des Produktgasgemisches P₁ darin, so dass der im Produktgasgemisch P₁ enthaltene Schwefel und Wasserstoff unter Bildung von weiterem Schwefelwasserstoff zu einem Produktgasgemisch P₂ umgesetzt wird,
- Zuführen von unter Druck stehendem Wasserstoff in die Schwefelschmelze, wobei der zugeführte Wasserstoff gemeinsam mit aus der Schwefelschmelze in den gasförmigen Zustand überführtem Schwefel zumindest teilweise von mindestens einer nicht drucktragenden zweiten Kaverne direkt aufgenommen wird, und
- Sammeln des Produktgasgemisches P_{final} in einem Gassammelbereich.

10. Verfahren nach Anspruch 9, **dadurch gekennzeichnet, dass** das Produktgasgemisch in einer oder mehreren dritten oder höheren Kaverne(n) aufgenommen und zumindest zeitweilig dort belassen wird, so dass der im Produktgasgemisch P₂ enthaltene Schwefel und Wasserstoff unter Bildung von weiterem Schwefelwasserstoff umgesetzt wird.

11. Verfahren nach einem der Ansprüche 9 und 10, **dadurch gekennzeichnet, dass** die gesamte Menge des im unteren Reaktorbereich gebildeten Produktgasgemisches Pᵤ kontinuierlich mittels einer oder mehrerer nicht drucktragenden Einbauvorrichtung(en) in den Gassammelbereich überführt wird, wobei mit Hilfe eines Katalysators in der/den Einbauvorrichtung(en) der im Produktgasgemisch Pᵤ enthaltene Schwefel und Wasserstoff unter Bildung von weiterem Schwefelwasserstoff umgesetzt wird.

12. Verfahren nach Anspruch 11, **dadurch gekennzeichnet, dass** der Katalysator durch Wärmeübertrag der durch die Umsetzung von Schwefel und Wasserstoff im Katalysator freigesetzten Reaktionswärme in die Schwefelschmelze gekühlt wird.

13. Verfahren nach einem der Ansprüche 11 und 12, **dadurch gekennzeichnet, dass** der Anteil von Schwefelwasserstoff im Produktgasgemisch Pᵤ vor der Einleitung in die den Katalysator enthaltene(n) Einbauvorrichtung(en) wenigstens 60% des Gasvolumens beträgt.

14. Verfahren nach einem der Ansprüche 9 bis 13, **dadurch gekennzeichnet, dass** es einen zusätzlichen Verfahrensschritt umfasst, in dem der im Produktgasgemisch P_{final} enthaltene Schwefel kondensiert und direkt in den Reaktor zurückgeführt wird.

15. Verfahren nach einem der Ansprüche 9 bis 14, **dadurch gekennzeichnet, dass** die Herstellung von Schwefelwasserstoff bei einem Druck von 5 bis 15 bar durchgeführt wird.

16. Verfahren nach einem der Ansprüche 9 bis 15, **dadurch gekennzeichnet, dass** die Temperatur der Schwefelschmelze 400 bis 450°C beträgt.

17. Verfahren nach einem der Ansprüche 9 bis 16, **dadurch gekennzeichnet, dass** die Schwefelschmelze kontinuierlich nach dem Mammutpumpenprinzip umgewälzt wird.

18. Verwendung eines Reaktors nach einem der Ansprüche 1 bis 8 zur Herstellung von Schwefelwasserstoff mit einem Sulfangehalt von höchstens 600 ppm.
